# EUROPEAN PATENT APPLICATION

(11) **EP 4 198 116 A1**
(43) Date of publication of application: **21.06.2023**
(21) Application number: 21855945.8
(22) Date of filing: 06.08.2021
(51) Int. Cl.: C12M 1/00, C12M 1/34

(54) **NUCLEIC ACID AMPLIFICATION CHIP**

(30) Priority: 11.08.2020 JP 2020135820
(71) Applicant: Kyorin Pharmaceutical Co., Ltd., Tokyo 101-8311 (JP)
(72) Inventor: GOHDA Keisuke, Uji-shi, Kyoto 611-0033 (JP); UMEI Kentaro, Tokyo 101-8311 (JP)
(74) Representative: Handley, Matthew Edward
(86) International application number: PCT/JP2021/029405
(87) International publication number: WO 2022/034866

(57) **Abstract**

In a nucleic acid amplification chip, a filter is provided inside or outside a PCR reaction container with respect to a micro-flow channel. Here, the filter is fixed to the PCR reaction container via a fixing portion. In this case, since the fixing portion is formed, the reliability of fixing the filter to the PCR reaction container can be improved. For this reason, the leakage of an evaporated sample solution (aerosol) from a gap between the filter and the PCR reaction container can be suppressed. Further, since the fixing portion is formed, the leakage of the evaporated sample solution (aerosol) can be suppressed without increasing the thickness of the filter, so that the filter can be made thin. As a result, the overall thickness of the nucleic acid amplification chip can also be reduced, so that the degree of freedom in designing the nucleic acid amplification chip is improved.

## Description

### Technical Field

The present disclosure relates to a nucleic acid amplification chip.

### Background Art

In the past, a nucleic acid amplification chip including a PCR reaction container used for polymerase chain reaction (PCR) is known. In a thermal cycler for general-purpose PCR or real-time PCR, it takes time for temperature to change due to its very large heat capacity, and PCR reaction requires one to two hours. Patent Literature 1 describes an increase in the speed of a thermal cycle by repeatedly feeding a sample solution to a plurality of temperature zones using a nucleic acid amplification chip in which a micro-flow channel is formed.

Patent Literature 2 describes a nucleic acid amplification chip in which a filter is installed in a PCR reaction container to prevent contamination such that the quality of DNA amplified by PCR does not degrade.

### Citation List

### Patent Literature

Patent Literature 1: International Publication WO 2016/006612
Patent Literature 2: International Publication WO 2017/094674

### Summary of Invention

### Technical Problem

Here, in the nucleic acid amplification chip of Patent Literature 2, an installation portion for installing the filter is formed in the PCR reaction container, and the filter is disposed by pushing the filter into the installation portion. However, in such a configuration, air is likely to leak from a gap between the installation portion and the filter. Therefore, in order to suppress the leakage, a thickness of the filter needs to be set to a certain value or more. In this case, we have a problem that it is difficult to make the nucleic acid amplification chip thin as the thickness of the filter increases. On the other hand, when the thickness of the filter is reduced, in addition to air leakage, the inventors have also found the problem that there is a possibility that a liquid feeding device is contaminated with an evaporated sample solution (aerosol),

The present disclosure is conceived to solve such problems, and an object of the present disclosure is to provide a nucleic acid amplification chip that prevents leakage of an evaporated sample solution (aerosol) even when the thickness of a filter is reduced.

### Solution to Problem

The inventors of this application have conducted intensive studies, have found that the foregoing object can be achieved by fixing the filter via a fixing portion, and have completed the present disclosure.

Namely, according to the present disclosure, there is provided a nucleic acid amplification chip including: a PCR reaction container in which a micro-flow channel through which a sample solution flows is formed; and a filter provided on at least one of an inside and an outside of the PCR reaction container with respect to the micro-flow channel. The filter is fixed to the PCR reaction container via a fixing portion.

In the nucleic acid amplification chip according to the present disclosure, a filter is provided inside or outside the PCR reaction container with respect to the micro-flow channel. Here, the filter is fixed to the PCR reaction container via the fixing portion. In this case, since the fixing portion is formed, the reliability of fixing the filter to the PCR reaction container can be improved. For this reason, the leakage of the evaporated sample solution (aerosol) from a gap between the filter and the PCR reaction container can be suppressed. Further, since the fixing portion is formed, the leakage of the evaporated sample solution (aerosol) can be suppressed without increasing the thickness of the filter, so that the filter can be made thin. As a result, the overall thickness of the nucleic acid amplification chip can also be reduced, so that the degree of freedom in designing the nucleic acid amplification chip is improved.

The fixing portion may be formed by at least one means of applying an adhesive agent, pressurizing, and heating. The fixing portion capable of sufficiently fixing the filter to the PCR reaction container can be formed by this means.

A thickness of the filter may be 1 mm or less. In this case, the thickness of the nucleic acid amplification chip can also be reduced by making the filter sufficiently thin.

The filter may be fixed to an outer side of the PCR reaction container at a communication port of the PCR reaction container, the communication port communicating with a liquid delivery mechanism. In this case, since the filter is fixed to the outer side of the PCR reaction container, the filter can be easily provided.

The fixing portion may be formed by heat fusion. In this case, unlike the case of forming the fixing portion using an adhesive agent, the fixing portion can be formed using only the filter and the PCR reaction container without using an additional member.

A material used for the filter may be polytetrafluoroethylene. In this case, it is possible to obtain the filter that absorbs less gas and that is good in heat resistance or in chemical resistance.

### Advantageous Effects of Invention

According to the present disclosure, it is possible to provide the nucleic acid amplification chip of which the thickness can be reduced.

### Brief Description of Drawings

FIG. 1 is a schematic configuration diagram of a nucleic acid amplification device on which a nucleic acid amplification chip according to an embodiment of the present disclosure is placed.
FIG. 2 is a plan view showing the nucleic acid amplification chip according to the embodiment of the present disclosure.
FIGS. 3(a) and 3(b) are enlarged diagrams showing a configuration around a filter.
FIGS. 4(a) and 4(b) are enlarged diagrams showing a configuration around the filter.
FIGS. 5(a) and 5(b) are enlarged diagrams showing a configuration around the filter.
FIGS. 6(a) and 6(b) are enlarged diagrams showing a configuration around the filter.
FIGS. 7(a) and 7(b) are enlarged diagrams showing a configuration around the filter.
FIGS. 8(a) and 8(b) are enlarged diagrams showing a configuration around the filter.
FIGS. 9(a) and 9(b) are enlarged diagrams showing a configuration around the filter.
FIGS. 10 is an enlarged diagram showing a configuration around the filter.
FIGS. 11(a) to 11(d) are enlarged diagrams showing a configuration around the filter.
FIGS. 12(a) and 12(b) are diagrams showing one example of a method for forming a fixing portion via heat fusion.
FIGS. 13(a) and 13(b) are diagrams showing one example of a method for forming a fixing portion via heat fusion.
FIGS. 14(a) and 14(b) are diagrams showing one example of a method for forming a fixing portion via heat fusion.
FIG. 15 is an enlarged diagram showing a configuration around a filter.

### Description of Embodiments

Hereinafter, a nucleic acid amplification chip according to one embodiment of the present disclosure will be described with reference to the accompanying drawings. Incidentally, in the description of the drawings, the same elements are denoted by the same reference signs, and duplicate descriptions will not be repeated.

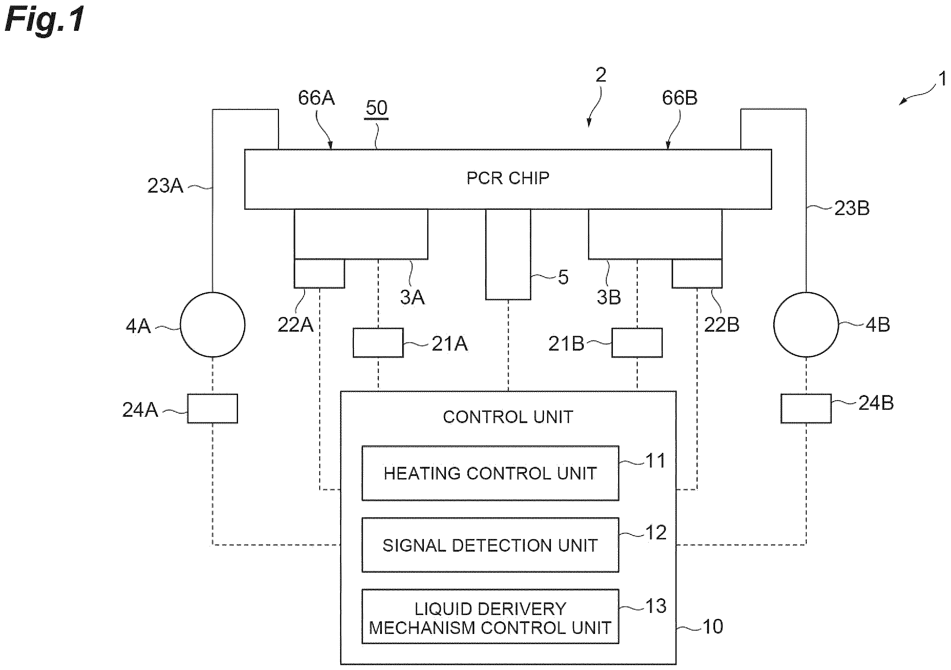

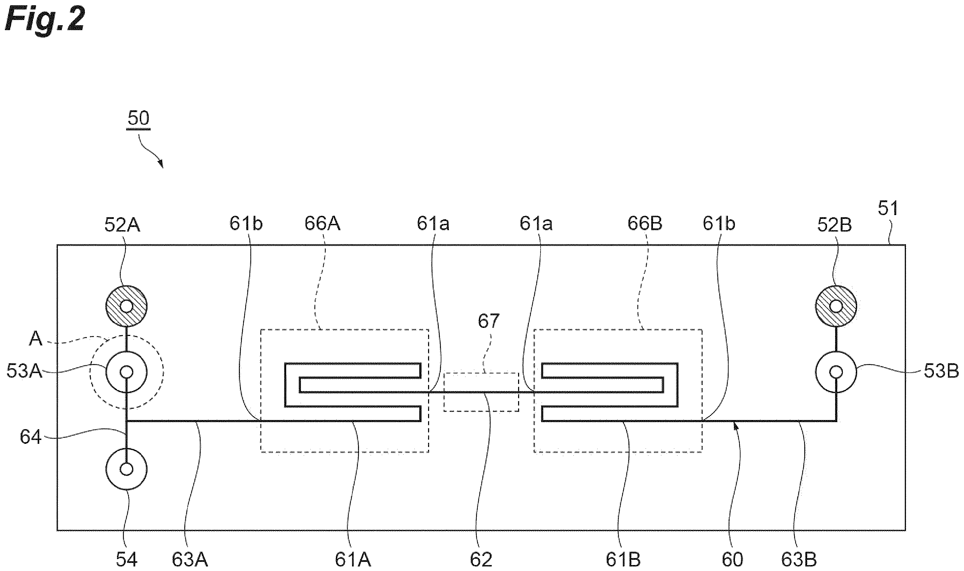

FIG. 1 is a schematic configuration diagram of a nucleic acid amplification device 1 on which a nucleic acid amplification chip 50 according to an embodiment of the present disclosure is placed. FIG. 2 is a plan view diagram of the nucleic acid amplification chip 50. The nucleic acid amplification device 1 is a device using a PCR method (polymerase chain reaction) in which thermal cycling is performed by placing the nucleic acid amplification chip 50 thereon and by reciprocating a sample solution between two temperature zones in a micro-flow channel of the nucleic acid amplification chip 50. The nucleic acid amplification device 1 performs nucleic acid amplification using a plurality of cycles of denaturation, annealing of primer pairs to opposite strands, and primer extension to exponential increase copy numbers of a target nucleic acid sequence. A nucleic acid amplification method using the nucleic acid amplification device 1 according to the present embodiment may use DNA as a template or may use RNA as a template. In the case of using RNA as a template, it is preferable that a reverse transcriptase is used together.

As shown in FIG. 1, the nucleic acid amplification device 1 includes a nucleic acid amplification chip placement portion 2, temperature regulation units 3A and 3B, liquid delivery mechanisms 4A and 4B, a detection unit 5, and a control unit 10.

The nucleic acid amplification chip placement portion 2 is a portion on which the nucleic acid amplification chip 50 is placed. The nucleic acid amplification chip placement portion 2 has a placement surface for placing the nucleic acid amplification chip 50. Incidentally, the placement surface of the nucleic acid amplification chip placement portion 2 may be formed of upper surfaces of the temperature regulation units 3A and 3B. Alternatively, a substrate for placing the nucleic acid amplification chip 50 on a heat source may be provided, and an upper surface of the substrate may be used as a placement surface.

Here, a configuration of the nucleic acid amplification chip 50 will be described with reference to FIG. 2. As shown in FIG. 2, the nucleic acid amplification chip 50 is configured by forming a micro-flow channel 60 in a PCR reaction container 51 having a plate shape.

It is preferable that the PCR reaction container 51 for forming the micro-flow channel 60 is made of a material satisfying all or some of requirements such as (i) having relatively high thermal conductivity, (ii) being stable in a temperature range required for PCR, (iii) being resistant to corrosion by electrolyte solutions or organic solvents, (iv) having low adsorption of nucleic acids or proteins. Specifically, examples of the material of the PCR reaction container 51 (substrate 30 to be described later) include glass, quartz, silicon, and various plastics such as cycloolefin polymer (COP), but are not limited thereto.

The micro-flow channel 60 is configured, for example, by forming a groove in a surface of the PCR reaction container 51 via a method such as machining such as cutting through NC processing, injection molding, nanoimprinting, or soft lithography, and by sealing the groove with a seal (preferably, for example, a transparent seal made of polyolefin or the like). Alternatively, the micro-flow channel 60 can be formed in the PCR reaction container 51 by 3D printing. The cross-sectional shape of the micro-flow channel 60 is not particularly limited and can be a semicircular shape, a circular shape, a rectangular shape, a trapezoidal shape, or the like. In addition, a cross section of the micro-flow channel 60 can have, for example, a width of approximately 10 to 1000 µm and a depth of approximately 10 to 1000 µm. In addition, each of the width and the depth of the micro-flow channel 60 can be constant, or the width or the depth can be partially changed.

In the example shown in FIG. 2, the micro-flow channel 60 includes heated portions 61A and 61B, an intermediate portion 62, connection portions 63A and 63B, and an introduction portion 64.

The heated portions 61A and 61B are portions that are heated by the temperature regulation units 3A and 3B (refer to FIG. 1) to regulate temperature of the passing sample solution. The heated portion 61A is formed in the PCR reaction container 51 at a position corresponding to a denaturation temperature zone 66A heated by the temperature regulation unit 3A. The heated portion 61B is formed in the PCR reaction container 51 at a position corresponding to an extension and annealing temperature zone 66B heated by the temperature regulation unit 3B. The shape of the heated portions 61A and 61B may be a shape that can ensure a flow channel length, namely, a region where the sample solution stays in each of the temperature zones 66A and 66B. For this reason, the shape of the heated portions 61A and 61B can be the shape of a serpentine flow channel having a loop shape or of a curved flow channel having a spiral shape or the like.

The intermediate portion 62 is a portion that connects the heated portion 61A and the heated portion 61B. Namely, the heated portion 61A (namely, the denaturation temperature zone 66A) and the heated portion 61B (namely, the extension and annealing temperature zone 66B) are disposed apart from each other in a direction parallel to the surface of the PCR reaction container 51. Therefore, the intermediate portion 62 is disposed between the heated portion 61A and the heated portion 61B. In the example shown in FIG. 2, the intermediate portion 62 has a linearly extending shape, but may have a shape extending in a curved shape such as a loop shape. Incidentally, connection points between the heated portions 61A and 61B and the intermediate portion 62 are configured as entry ways 61a and 61a of the temperature zones 66A and 66B.

The connection portions 63A and 63B are portions that connect communication ports 52A and 52B for the liquid delivery mechanisms 4A and 4B (refer to FIG. 1) and the heated portions 61A and 61B, respectively. Filters 53A and 53B are provided in the connection portions 63A and 63B, respectively. The filters 53A and 53B are members that prevent the evaporated sample solution (aerosol) from contaminating the liquid delivery mechanisms 4A and 4B. Incidentally, connection points between the heated portions 61A and 61B and the connection portions 63A and 63B are configured as entryways 61b and 61b of the temperature zones 66A and 66B, respectively. The introduction portion 64 is a portion that connects an introduction port 54 for the sample solution and the connection portion 63A. In addition, the introduction portion 64 may be designed to connect the introduction port 54 for the sample solution and the connection portion 63B. The introduction port 54 can be sealed by a seal, a valve, or the like, if necessary. Incidentally, the shapes of the connection portions 63A and 63B and the introduction portion 64 can be appropriately changed depending on a positional relationship between the communication ports 52A and 52B and the introduction port 54, and are not limited to the shapes shown in FIG. 2.

Returning to FIG. 1, the temperature regulation units 3A and 3B form the denaturation temperature zone 66A and the extension and annealing temperature zone 66B, respectively. It is preferable that the temperature regulation units 3A and 3B maintain the denaturation temperature zone 66A and the extension and annealing temperature zone 66B at constant temperatures, respectively. In order to maintain such temperatures, it is preferable that the temperature regulation units 3A and 3B are formed of heat sources such as cartridge heaters. However, the temperature regulation units 3A and 3B are not particularly limited as long as the temperature regulation units 3A and 3B are temperature-regulatable devices.

Since the temperature regulation units 3A and 3B maintain temperatures of the denaturation temperature zone 66A and the extension and annealing temperature zone 66B at the constant temperatures, respectively, the heated portions 61A and 61B of the micro-flow channel 60 formed in the temperature zones 66A and 66B can also be maintained at corresponding temperatures. Therefore, the temperature regulation units 3A and 3B can change temperature of the sample solution that has moved to the temperature zones 66A or 66B, to desired temperatures in the temperature zones 66A or 66B, respectively.

For example, the temperature regulation unit 3Amay maintain the denaturation temperature zone 66A at a temperature required for the denaturation reaction of DNA in PCR. The temperature of the denaturation temperature zone 66A is preferably in a range of approximately 90 to 100°C, more preferably approximately 95°C. The temperature regulation unit 3B may maintain the extension and annealing temperature zone 66B at a temperature required for the annealing reaction and extension reaction of DNA in PCR. The temperature of the extension and annealing temperature zone 66B is preferably in a range of approximately 40 to 75°C, more preferably in a range of approximately 55 to 65°C.

Incidentally, the temperature regulation units 3A and 3B are connected to drivers 21A and 21B and to temperature monitoring units 22A and 22B, respectively. The drivers 21A and 21B are devices that control the temperature regulation units 3A and 3B to generate heat for maintaining the temperature zones 66A and 66B at the desired temperatures, based on control signals from the control unit 10. The temperature monitoring units 22A and 22B are devices that monitor temperatures of the temperature regulation units 3A and 3B to transmit monitoring results to the control unit 10.

The liquid delivery mechanisms 4A and 4B are mechanisms that move the sample solution in the micro-flow channel 60 so as to reciprocate between the denaturation temperature zone 66A and the extension and annealing temperature zone 66B. As the liquid delivery mechanisms 4A and 4B, a mechanism is used which equalizes air pressures of an air suction portion and an air discharge portion when liquid delivery is stopped. Examples of the liquid delivery mechanisms 4A and 4B that equalize air pressures of the air suction portion and the air discharge portion when liquid delivery is stopped can include a microblower and a fan.

The liquid delivery mechanisms 4A and 4B are connected to the communication ports 52A and 52B (refer to FIG. 2) of the nucleic acid amplification chip 50 via air supply flow channels 23A and 23B, respectively. The liquid delivery mechanisms 4A and 4B are connected to drivers 24A and 24B, respectively. The drivers 24A and 24B are devices that control the liquid delivery mechanisms 4A and 4B to supply air at a desired flow rate at a desired time, based on a control signal from the control unit 10. When the liquid delivery mechanism 4A supplies air, the sample solution in the micro-flow channel 60 (refer to FIG. 2) is delivered in a direction from a denaturation temperature zone 66A side toward an extension and annealing temperature zone 66B side. When the liquid delivery mechanism 4B supplies air, the sample solution in the micro-flow channel 60 (refer to FIG. 2) is delivered in a direction from the extension and annealing temperature zone 66B side toward the denaturation temperature zone 66A side.

The detection unit 5 is a device that detects the sample solution in the nucleic acid amplification chip 50. The detection unit 5 detects the sample solution and transmits the detection result to the control unit 10. The detection unit 5 detects the sample solution between the denaturation temperature zone 66A and the extension and annealing temperature zone 66B in the nucleic acid amplification chip 50. Specifically, the detection unit 5 detects the sample solution in a detection region 67 in the vicinity of the center of the intermediate portion 62 of the micro-flow channel 60 (refer to FIG. 2). The detection unit 5 is formed of, for example, a fluorescence detector.

The control unit 10 includes a heating control unit 11, a signal detection unit 12, and a liquid delivery mechanism control unit 13. The heating control unit 11 controls the temperature regulation units 3A and 3B such that the temperatures of the denaturation temperature zone 66A and the extension and annealing temperature zone 66B are kept constant at the desired temperatures. The signal detection unit 12 receives a detection result from the detection unit 5. The liquid delivery mechanism control unit 13 controls the liquid delivery mechanisms 4A and 4B to move the sample solution in the micro-flow channel 60 as desired.

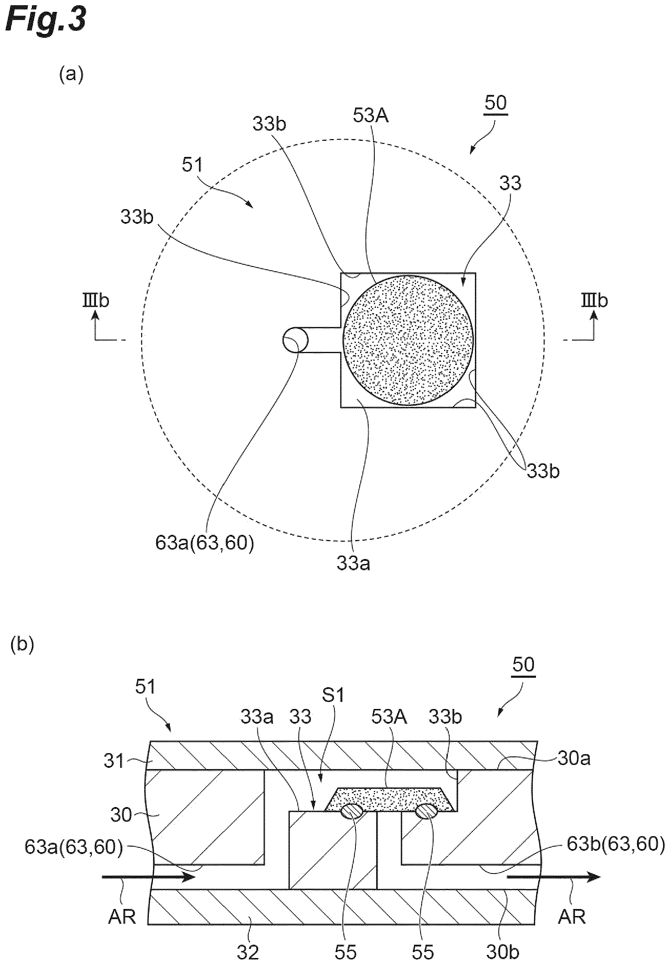

Next, a configuration around the filter 53Awill be described with reference to FIG. 3. FIG. 3 is an enlarged diagram showing a configuration around the filter 53A in the nucleic acid amplification chip 50. FIG. 3(a) is an enlarged plan view diagram of the nucleic acid amplification chip 50. However, an upper film 31 is omitted in FIG. 3(a). In addition, FIG. 3(a) is a diagram specifically showing a configuration of a portion indicated by "A" of FIG. 2. FIG. 3(b) is a cross-sectional diagram taken along line IIIb-IIIb of FIG. 3(a). Incidentally, in the following description, the structure around the filter 53A will be described, and a structure around the filter 53B also has the same configuration.

As shown in FIG. 3(b), the PCR reaction container 51 is configured by affixing the films 31 and 32 to the substrate 30. Specifically, a space forming portion 33 that forms a space S1 for fixing the filter 53A is formed in an upper surface 30a of the substrate 30. The space forming portion 33 is sealed by affixing the film 31 to the upper surface 30a of the substrate 30, to form the space S1 for fixing. Flow channels 63a and 63b are formed in the substrate 30. The flow channel 63a is a flow channel that connects the space S1 for fixing and the communication port 52A (refer to FIG. 2) to which the liquid delivery mechanism is connected. The flow channel 63b is a flow channel that connects the space S1 for fixing and the heated portion 61A. The flow channels 63a and 63b extend downward from the space forming portion 33 inside the substrate 30, and extend along a lower surface 30b of the substrate 30 in a state where the flow channels 63a and 63b are open on the surface 30b. The flow channels 63a and 63b are sealed by affixing the film 32 to the lower surface 30b of the substrate 30.

The flow channel 63b opens toward the space S1 for fixing in the vicinity of a center position of a bottom surface 33a of the space forming portion 33. The filter 53A is placed on the bottom surface 33a of the space forming portion 33 to close an opening of the flow channel 63b in the vicinity of the center position. Incidentally, the flow channel 63a is connected to the space forming portion 33 at a position on an outer peripheral side of the filter 53A. With such a configuration, the filter 53A is provided inside the PCR reaction container 51 with respect to the micro-flow channel 60. Air AR supplied from the liquid delivery mechanism 4A flows from the flow channel 63a to the space S1 for fixing. Incidentally, a mode can also be adopted in which the disposition of the flow channel 63a and the flow channel 63b is reversed to open the flow channel 63a toward the space S1 for fixing in the vicinity of the center position of the bottom surface 33a of the space forming portion 33.

As shown in FIG. 3(a), the space forming portion 33 has a rectangular shape when viewed from above. Four side surfaces 33b of the space forming portion 33 are formed to be close to a part of an outer peripheral edge of the filter 53A having a circular shape. Therefore, the four side surfaces 33b of the space forming portion 33 function as positioning portions when the filter 53A is fixed to the substrate 30.

The filter 53A can perform device protection on the liquid delivery mechanism 4A by preventing the evaporated sample solution (aerosol) from entering a liquid delivery mechanism 4A (refer to FIG. 1) side. For example, a thickness of the filter 53A may be reduced by limiting the function of the filter 53A to a function of device protection. As the material of the filter 53A, polyethylene, polytetrafluoroethylene (PTFE), perfluoroalkoxy alkane (PFA), perfluoroethylene-propylene copolymer (FEP), ethylene-tetrafluoroethylene copolymer (ETFE), or the like is employed. The thickness of the filter 53A is not particularly limited, but may be thinner than at least a thickness of the space S1 for fixing. Specifically, the thickness of the filter 53A may be 1 mm or less, and for example, a filter having a thickness of 0.5 to 0.7 mm or a filter having a thickness of 0.3 to 0.5 mm is employed. Incidentally, the filter 53A may have a thickness of 0.03 mm or more to ensure its function. An area of the filter 53A is not particularly limited as long as the area is larger than an area of an opening portion of the flow channel 63b that opens toward the space S1, but for example, can be equal to or less than an area of the bottom surface 33a of the space forming portion 33. An upper surface of the filter 53A is disposed apart from the film 31 in an up-down direction. A space is formed between the filter 53A and the film 31.

Main surfaces of the films 31 and 32 toward a substrate 30 side may have a tacky property, and the films 31 and 32 may include respective functional layers showing a tacky property or an adhesive property when pressed. As the material of the films 31 and 32, for example, resin such as cyclophorefin polymer, polyester, polypropylene, polyethylene, or acrylic may be employed, and glass having a plate shape or the like may also be employed.

The filter 53A is fixed to the PCR reaction container 51 (substrate 30) via a fixing portion 55. Namely, the fixing portion 55 is formed by applying active processing work to the filter 53A, and the filter 53A is fixed by the fixing portion 55. The fixing portion 55 is formed at least at a position on an outer peripheral side with respect to the opening portion of the flow channel 63b. It is preferable that the fixing portion 55 is continuously formed over the entire circumference (without a break) of the filter 53A. Meanwhile, in some cases, the evaporated sample solution (aerosol) can be prevented from transmitting through a gap between the bottom surface 33a and a lower surface of the filter 53A. In this case, the fixing portion 55 may not be continuously formed over the entire circumference of the filter 53A, and there may be a break. For example, the fixing portions 55 each having a spot shape may be formed at a plurality of locations while being spaced apart from each other. The fixing portion 55 is formed by at least one means of applying an adhesive agent, pressurizing, and heating. For example, when the filter 53A and the bottom surface 33a are fixed with a cured adhesive layer by applying an adhesive agent, the adhesive layer and a portion of the filter 53A into which the adhesive agent sinks correspond to the fixing portion 55. When the filter 53A and the bottom surface 33a are fixed by pressurizing the filter 53A against the bottom surface 33a at high pressure, a portion of the filter 53A which is brought into close contact with the bottom surface 33a, and a portion at which the filter 53A bites into the material of the substrate 30 correspond to the fixing portion 55. When a contact portion between the filter 53A and the bottom surface 33a is heated, a portion of the filter 53A which is brought into close contact with the bottom surface 33a, and a portion at which the filter 53A and the substrate 30 are integrated and solidified by melting of at least of the filter 53A and the substrate 30 correspond to the fixing portion 55. Incidentally, the fixing portion 55 may be formed by a complex combination of each means.

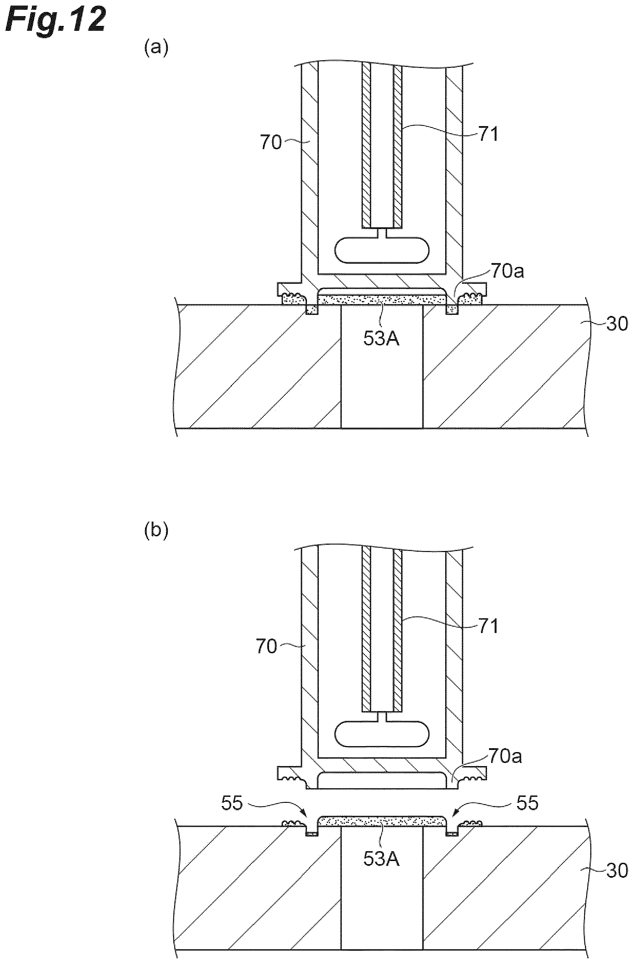

Specifically, the fixing portion 55 may be formed by heat fusion. When heat fusion is performed, at least one of the filter 53A and the substrate 30 is melted and solidified and the filter 53A and the substrate 30 are integrated, or the filter 53A enters the material of the substrate 30, so that the portion corresponds to the fixing portion 55. FIGS. 12 to 14 show one example of a method for forming the fixing portion 55 via heat fusion. As shown in FIG. 12, a heat fusing device 70 is prepared. The entirety of the heat fusing device 70 generates Joule heat when energized. In addition, the heat fusing device 70 includes a protrusion portion 70a at a tip portion. As shown in FIG. 12(a), the heat fusing device 70 heats the filter 53A disposed on the surface of the substrate 30 by generating heat while pressurizing the filter 53A with the protrusion portion 70a. After the heating is ended, cooling air is supplied to the filter 53A from a cooling nozzle 71 inside. As a result, as shown in FIG. 12(b), the filter 53A and the substrate 30 are solidified and brought into close contact with each other at an outer edge portion of the filter 53A. Particularly, a portion corresponding to the protrusion portion 70a is brought into close contact with the surface of the substrate 30 in a state where the filter 53A bites into the surface. The portion corresponds to the fixing portion 55.

When the filter 53A is fixed, a method using a monitor can be employed. Specifically, a position of the filter 53A that is a single body before heat fusion is detected using an arm portion of an articulated robot or a commercially available machine vision system using a fixed-point camera. Thereafter, similarly, a filter-fixing position of the PCR reaction container 51 is detected using the camera. The articulated robot that is automatically controlled picks up and places the filter at the filter-fixing position of the PCR reaction container 51, based on the detected position information. Thereafter, the filter 53A is heat-fusioned to the PCR reaction container 51 by pressing a high-temperature tip of a welding tool attached to a hand portion of the articulated robot, against the filter 53A.

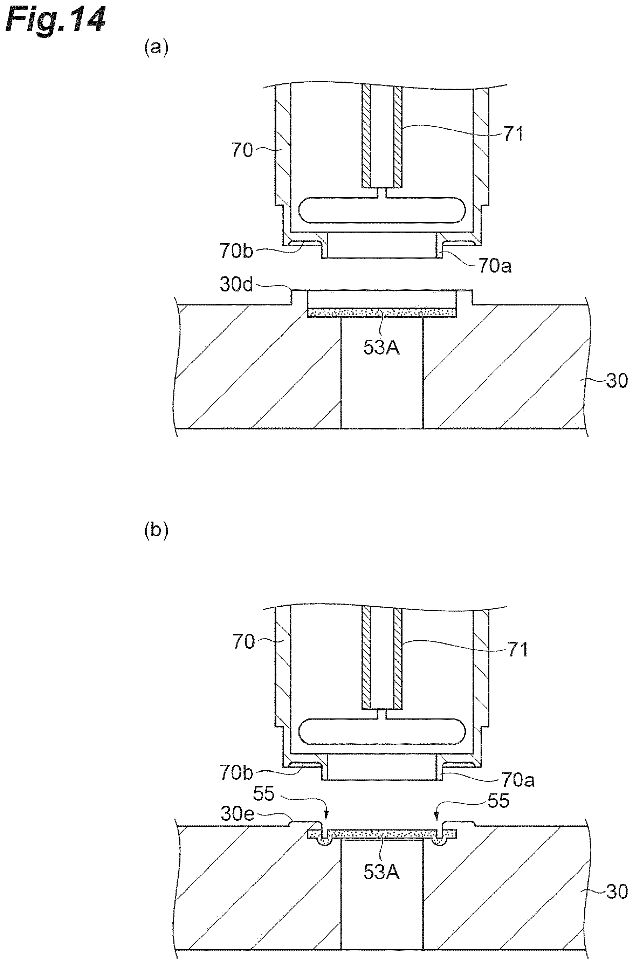

In another example, as shown in FIG. 14(a), a wall portion 30d for heat fusing protrudes around the filter 53A. The heat fusing device 70 includes the protrusion portion 70a at the tip portion, and a contact portion 70b for melting the wall portion 30d. The heat fusing device 70 heats the filter 53A disposed on the surface of the substrate 30 by generating heat while pressurizing the filter 53A with the protrusion portion 70a in a state where the contact portion 70b is brought into contact with and compressed against the wall portion 30d. After the heating is ended, cooling air is supplied to the filter 53A from the cooling nozzle 71 inside. As a result, as shown in FIG. 14(b), the outer edge portion of the filter 53A is brought into close contact with the surface of the substrate 30 while being held by a melted wall portion 30e. A portion corresponding to the protrusion portion 70a is brought into close contact with the surface of the substrate 30 in a state where the filter 53A bites into the surface.

The present disclosure is not limited to the above-described examples, and when the substrate 30 is melted by heating, the filter 53A may be brought into close contact with the surface of the substrate 30 in a state where the filter 53A bites into the surface, by pressing and heating the filter 53A. In addition, when the substrate 30 is made of a material that is not melted by heating, a material that is melted by heating is selected for the filter 53A, so that the filter 53A is partially melted and brought into close contact with the substrate 30. The portion corresponds to the fixing portion 55.

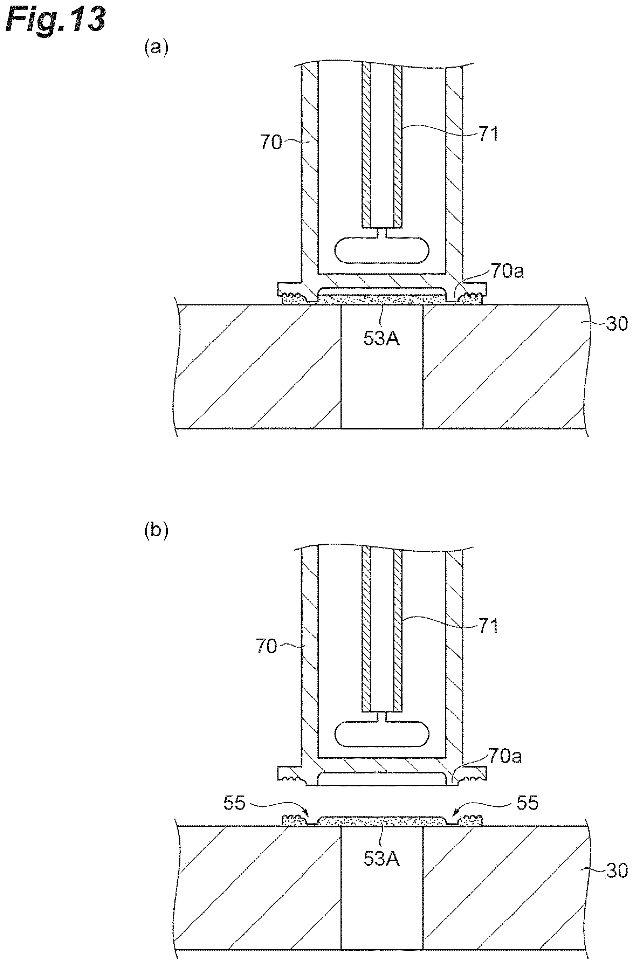

The material used for the filter 53A may be polytetrafluoroethylene (PTFE). In this case, specifically, the fixing portion 55 may be formed by heat fusion in the same manner as described above. As shown in FIG. 13, the heat fusing device 70 heats the filter 53A disposed on the surface of the substrate 30 by generating heat while pressurizing the filter 53A with the protrusion portion 70a. After the heating is ended, cooling air is supplied to the filter 53A from the cooling nozzle 71 inside. As a result, at the outer edge portion of the filter 53A, polytetrafluoroethylene is melted and the filter 53A and the substrate 30 are solidified and brought into close contact with each other. In this case, a portion corresponding to the protrusion portion 70a is brought into close contact with the surface of the substrate 30 in a state where the filter 53A doesn't bite into the surface. The portion corresponds to the fixing portion 55.

Next, actions and effects of the nucleic acid amplification chip 50 according to the present embodiment will be described.

In the nucleic acid amplification chip 50 according to the present embodiment, the filters 53A and 53B are provided inside the PCR reaction container 51 with respect to the micro-flow channel 60. Here, the filters 53A and 53B are fixed to the PCR reaction container 51 via the respective fixing portions 55. In this case, since the fixing portions 55 are formed, the reliability of fixing the filters 53A and 53B to the PCR reaction container 51 can be improved. For this reason, the leakage of the evaporated sample solution (aerosol) from gaps between the filters 53A and 53B and the PCR reaction container 51 can be suppressed. Further, since the fixing portions 55 are formed, the leakage of the evaporated sample solution (aerosol) can be suppressed without increasing the thickness of the filters 53A and 53B, so that the filters 53A and 53B can be made thin. As a result, the overall thickness of the nucleic acid amplification chip 50 can also be reduced, so that the degree of freedom in designing the nucleic acid amplification chip 50 is improved.

In addition, for example, a method is employed in which the filters 53A and 53B are attached to the PCR reaction container 51 by forming recesses for accommodating the filters 53A and 53B in the substrate 30 and by fitting the filters 53A and 53B into the respective recesses without a gap over the entire circumferences. In the case of employing such a method, the directivity (orientation) of the filters 53A and 53B should be taken into consideration, there is no choice but to rely on labor of a worker. Namely, it is difficult to automate the manufacturing of the nucleic acid amplification chip 50. On the other hand, in the nucleic acid amplification chip 50 according to the present embodiment, since the filters 53A and 53B are fixed to the PCR reaction container 51 via the fixing portions 55 which are actively formed, manufacturing automation made easy, and the manufacturing cost can be reduced.

The fixing portions 55 may be formed by at least one means of applying an adhesive agent, pressurizing, and heating. The fixing portions 55 capable of sufficiently fixing the filters 53A and 53B to the PCR reaction container 51 can be formed by this means.

The thickness of the filters 53A and 53B may be 1 mm or less. In this case, the thickness of the nucleic acid amplification chip 50 can also be reduced by making the filters 53A and 53B sufficiently thin.

The fixing portions 55 may be formed by heat fusion. In this case, unlike the case of forming the fixing portions 55 using an adhesive agent, the fixing portions 55 can be formed using only the filters 53A and 53B and the PCR reaction container 51 without using an additional member.

The material used for the filters 53A and 53B may be polytetrafluoroethylene. In this case, it is possible to obtain the filters 53A and 53B that absorb less gas and that are good in heat resistance or in chemical resistance. As a filter made of such a material, for example, a PTFE filter (Wintech Co., Ltd. and model: PTF020) is known. When polytetrafluoroethylene is used as the material of the filter, and the filter is fixed by heat fusion, the fixing portion can be formed using only the filter and the PCR reaction container without using an additional member.

The present disclosure is not limited to the above-described embodiment.

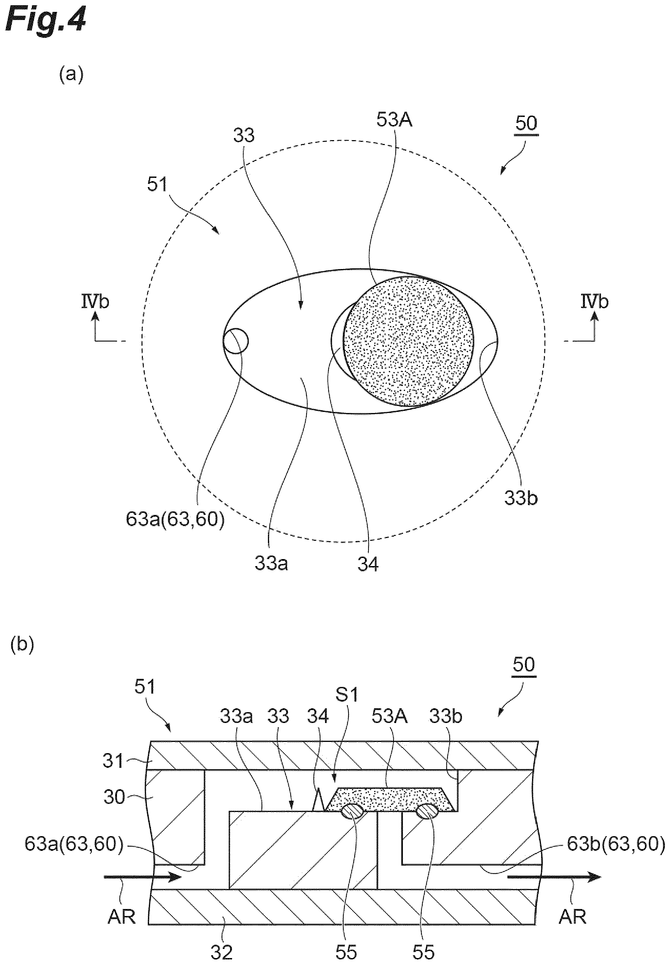

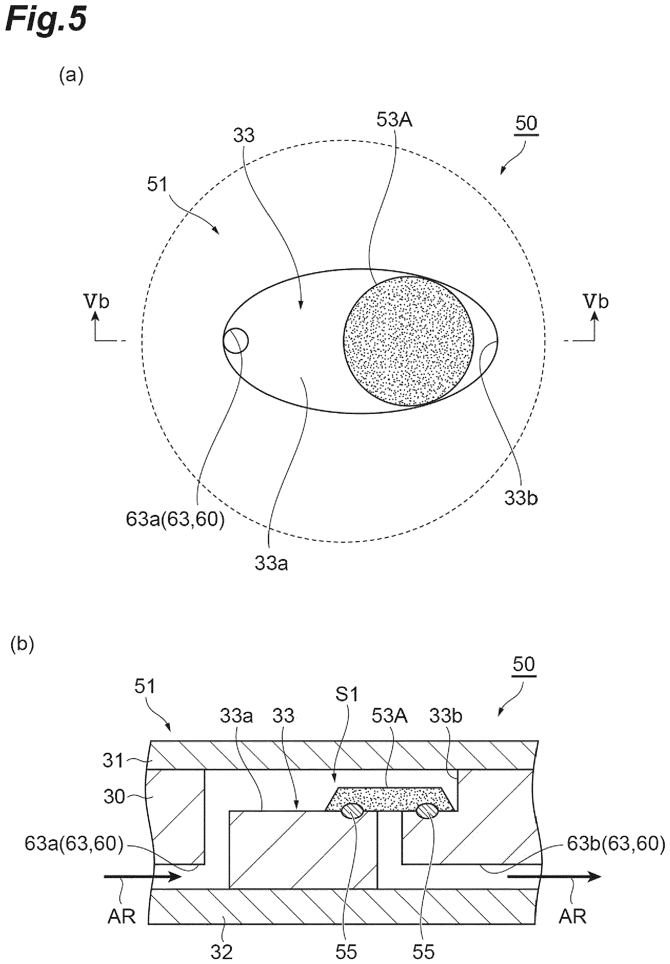

For example, the structure for position adjustment of the filter 53A before fixing is not particularly limited, and the configurations shown in FIGS. 4 to 6 may be employed. In the example shown in FIG. 4, a mechanism for positioning the filter 53A is formed of a frame 34. The frame 34 protrudes upward from the bottom surface 33a of the space forming portion 33. The frame 34 positions the filter 53A by abutting and being close to a part of the vicinity of an end portion on a flow channel 63a side of an outer peripheral edge portion of the filter 53A. The frame 34 has a shape extending along the outer peripheral edge portion of the filter 53A in a circumferential direction. Incidentally, the space forming portion 33 in FIG. 4 has an elliptical shape when viewed from above. As described above, when the filter 53Ais positioned using a monitor, as shown in FIG. 5, a mechanism for positioning the frame 34 or the like may be omitted.

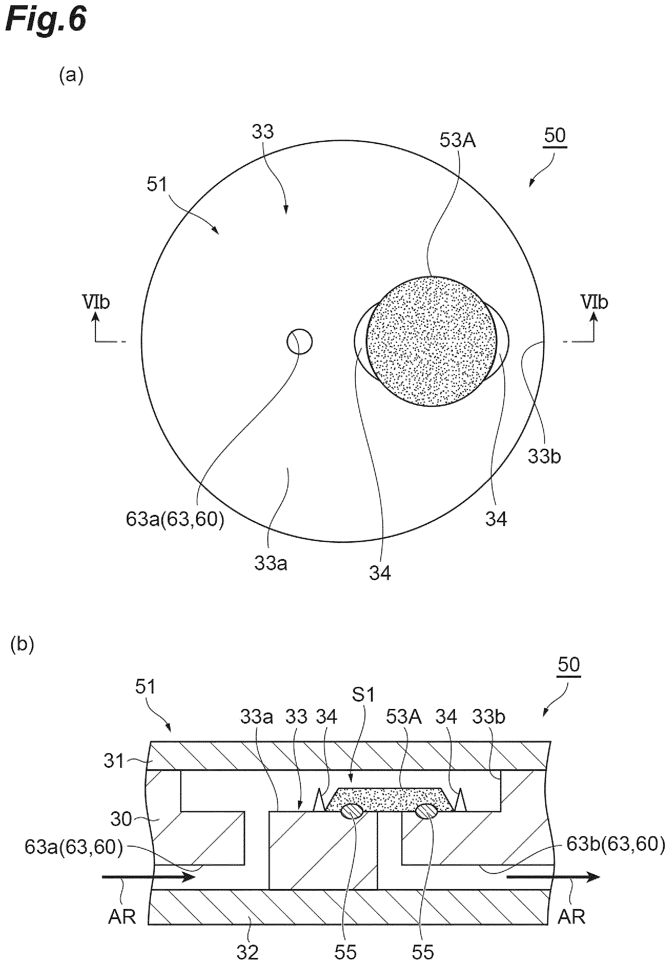

In the example shown in FIG. 6, the filter 53A and a pair of the frames 34 are provided on the bottom surface 33a of the space forming portion 33. Incidentally, in the form shown in FIG. 6, the space forming portion 33 is configured to be larger than in the forms shown in FIGS. 3 and 4.

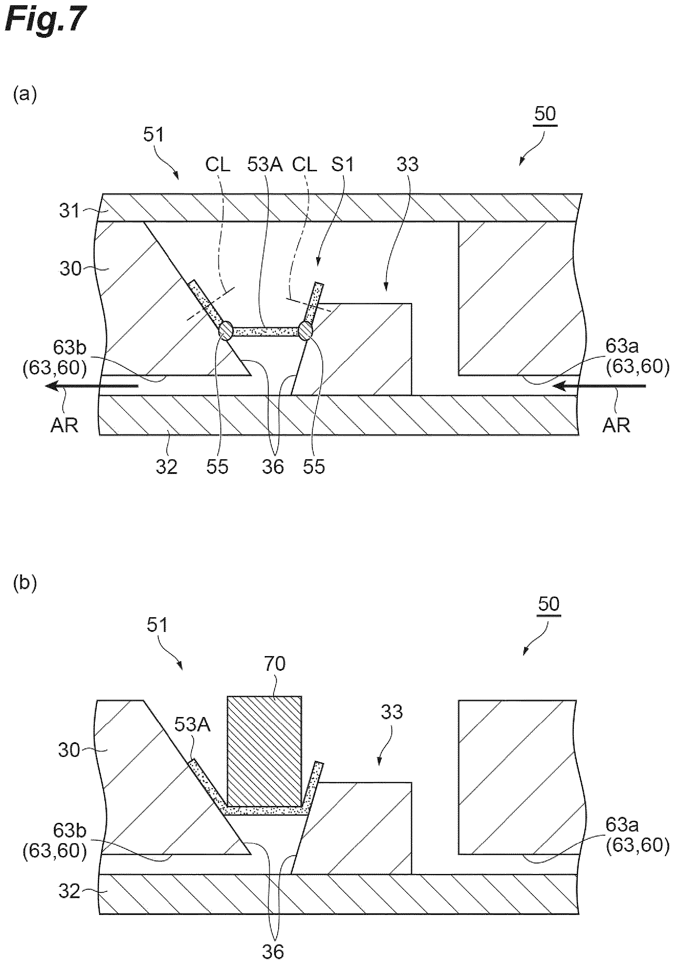

In addition, as shown in FIG. 7, a filter area in which the filter 53A shows its function may be widened by tapering the flow channel 63a. A tapered surface 36 that is inclined to widen upward is formed at a portion of the flow channel 63a which extends upward toward the space forming portion 33. In this case, an area of an opening of the flow channel 63a with respect to the space forming portion 33 is larger than in the configurations of FIG. 3 and the like. For this reason, the area of the filter 53A covering the opening is increased. In this case, even when the insufficiency of pressure becomes a problem due to poor passing of air, it is possible to ensure the passing of air by increasing the filter area. Incidentally, as shown in FIG. 7(b), the fixing portion 55 is formed by disposing the outer peripheral edge portion of the filter 53A along the tapered surface 36, and by pressing the heat fusing device 70 from above. As shown in FIG. 7(a), after the filter 53A is fixed to the substrate 30, a surplus portion protruding from the fixing portion 55 to an outer peripheral side remains along the tapered surface 36. Therefore, such a surplus portion may be cut along a cutting line CL.

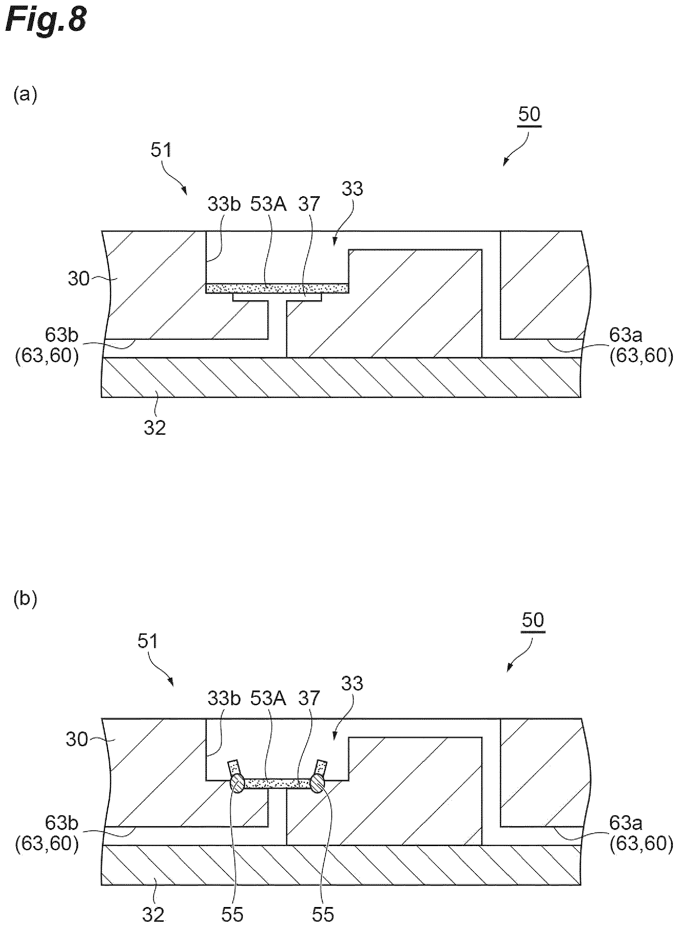

In addition, as shown in FIG. 8, an installation space forming portion 37 into which the filter 53A is pushed is formed at the position of the opening of the flow channel 63b with respect to the space forming portion 33. As shown in FIG. 8(a), a distance between the side surfaces 33b of the space forming portion 33 is equal to an outer diameter of the filter 53A, so that the space forming portion 33 functions as a positioning space before heat fusion. According to such a configuration, as shown in FIG. 8(b), the filter 53A is pushed into the installation space forming portion 37 by pressing a heat fusing device (for example, refer to FIG. 12) from above, so that the fixing portion 55 can be formed in the vicinity of an outer edge portion of the installation space forming portion 37.

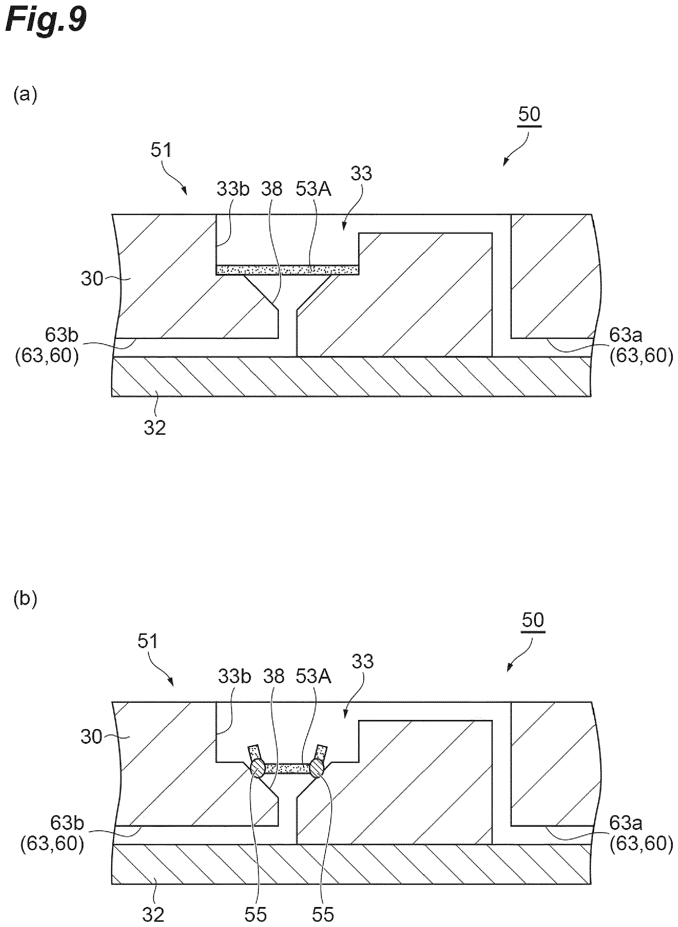

In addition, as shown in FIG. 9, instead of the installation space forming portion 37 of FIG. 8, an installation space forming portion 38 having a tapered surface that widens the area of the flow channel 63b may be employed. In this case, it is possible to obtain the advantage of widening the filter area of the filter 53A as described with reference to FIG. 7. Incidentally, a method for forming the fixing portion 55 is the same as that of FIG. 8.

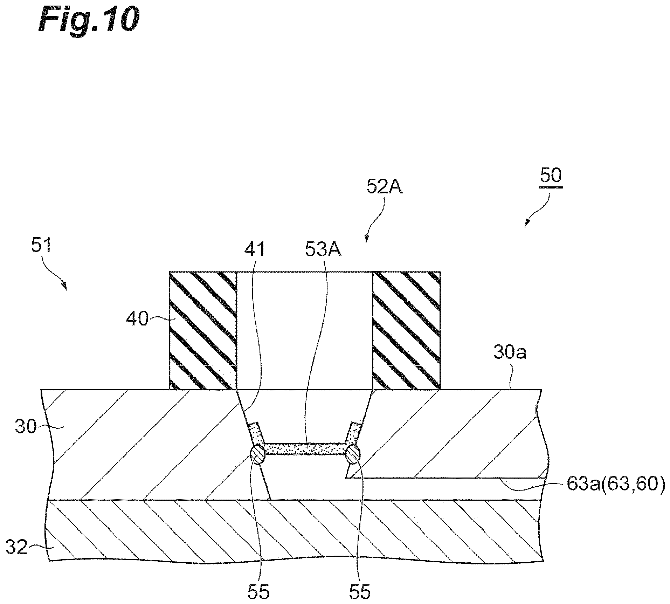

In addition, as shown in FIG. 10, the filter 53Amay be provided at the communication port 52A for the liquid delivery mechanism 4A. At the communication port 52A, the flow channel 63a is open on the upper surface 30a of the substrate 30. The flow channel 63a has a tapered surface 41 in the vicinity of an opening portion of the flow channel 63a. In addition, a communication member 40 made of silicone rubber is provided on the upper surface 30a of the substrate 30. The fixing portion 55 is formed on the tapered surface 41 by pressing the filter 53 against the tapered surface 41 in the same method as that of FIG. 7. According to such a configuration, the micro-flow channel 60 can be configured to be simple.

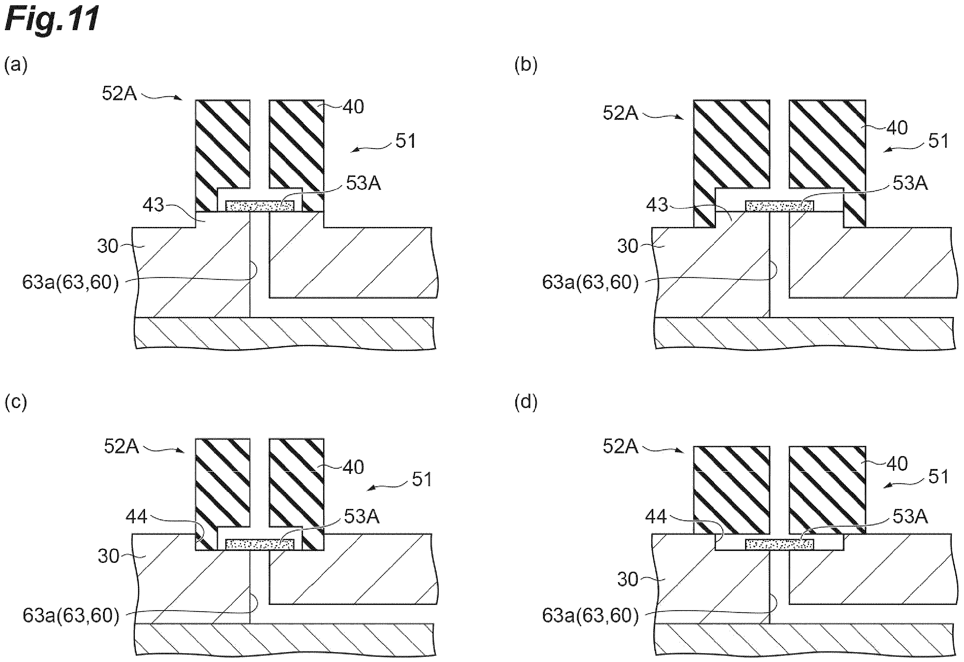

In the case of providing the filter 53A at the communication port 52A, a configuration shown in FIG. 11 may be employed. For example, as shown in FIG. 11(a), a stepped portion 43 rising upward is formed in the vicinity of the opening of the flow channel 63a, and the communication member 40 is provided on the stepped portion 43. In this case, a space is formed in the communication member 40, and the filter 53A may be disposed in the space. In addition, as shown in FIG. 11(b), the communication member 40 may be disposed such that a lower end of the communication member 40 surrounds the stepped portion 43 from an outer peripheral side. In addition, as shown in FIG. 11(c), a recess 44 that is recessed downward may be formed in the vicinity of the opening of the flow channel 63a, the filter 53A may be disposed in the recess 44, and the communication member 40 may also be fitted into the recess 44. Alternatively, as shown in FIG. 11(d), the communication member 40 may be disposed to cover the recess 44.

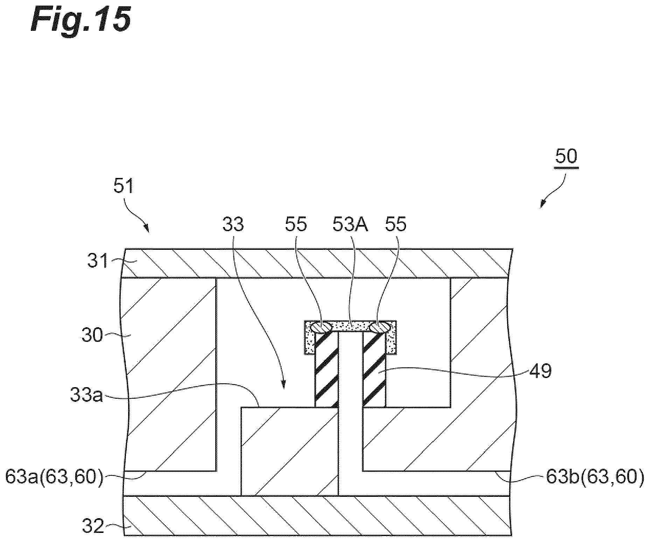

In addition, as shown in FIG. 15, a protrusion portion 49 protruding upward from the bottom surface 33a of the space forming portion 33 at the position of the flow channel 63b is provided. The filter 53A may be provided to cover the entirety of an upper end portion of the protrusion portion 49. In such a manner, the filter 53A may not be disposed to be pressed against a recess or the like. Incidentally, the fixing portion 55 is formed on an upper surface of the protrusion portion 49, but may be formed on an outer peripheral surface side.

### Reference Signs List

50: nucleic acid amplification chip, 51: PCR reaction container, 52A, 52B: communication port, 53A, 53B: filter, 55: fixing portion.

## Claims

1. A nucleic acid amplification chip comprising:
a PCR reaction container in which a micro-flow channel through which a sample solution flows is formed; and
a filter provided on at least one of an inside and an outside of the PCR reaction container with respect to the micro-flow channel,
wherein the filter is fixed to the PCR reaction container via a fixing portion.

2. The nucleic acid amplification chip according to claim 1,
wherein the fixing portion is formed by at least one means of applying an adhesive agent, pressurizing, and heating.

3. The nucleic acid amplification chip according to claim 1 or 2,
wherein a thickness of the filter is 1 mm or less.

4. The nucleic acid amplification chip according to any one of claims 1 to 3,
wherein the filter is fixed to an outer side of the PCR reaction container at a communication port of the PCR reaction container, the communication port communicating with a liquid delivery mechanism.

5. The nucleic acid amplification chip according to any one of claims 1 to 4,
wherein the fixing portion is formed by heat fusion.

6. The nucleic acid amplification chip according to any one of claims 1 to 5,
wherein a material used for the filter is polytetrafluoroethylene.
